# EUROPÄISCHE PATENTSCHRIFT

(11) **EP 0 307 576 B1**
(45) Veröffentlichungstag und Bekanntmachung des Hinweises auf die Patenterteilung: **09.11.1994**
(21) Anmeldenummer: 88111279.1
(22) Anmeldetag: 14.07.1988
(51) Int. Cl.: B60T 8/36, B60T 13/68, B60T 15/18

(54) **Relaisventileinrichtung**
Relay valve device
Valve relais

(30) Priorität: 12.09.1987 DE 3730778
(43) Veröffentlichungstag der Anmeldung: 22.03.1989
(73) Patentinhaber: WABCO GmbH, 30453 Hannover (DE)
(72) Erfinder: Möller, Johannes, D-3015 Wennigsen (DE); Rothen, Johann, Dipl.-Ing., D-3203 Sarstedt (DE); Petersen, Erwin, Dr.-Ing., D-3050 Wunstorf 1 (DE)
(74) Vertreter: Schrödter, Manfred, Dipl.-Ing.

(56) Entgegenhaltungen:
- DE-A- 2 145 433
- DE-A- 2 500 483
- DE-A- 2 503 792
- DE-A- 2 555 998
- FR-A- 2 586 221
- GB-A- 2 098 293

## Beschreibung

Die Erfindung betrifft eine durch Steuerdruckzu- bzw. -abführung betätigbare Relaisventileinrichtung gemäß dem Oberbegriff des Patentanspruchs 1.

Eine derartige Relaisventileinrichtung ist aus der DE-A-2 500 483 bekannt. Diese weist oberhalb eines aus einer Membran gebildeten Relaiskolbens eine Steuerkammer und unterhalb des Relaiskolbens eine Auslaßkammer auf. Über eine Steuerdruckzuleitung, welche auch einen Steueranschluß umfaßt, ist Steuerdruck der Steuerkammer zuführbar bzw. aus der Steuerkammer abführbar. Die Auslaßkammer ist einerseits über einen Arbeitsanschluß mit einem Verbraucherkreis verbunden. Andererseits ist die Auslaßkammer über ein Einlaßventil einer Ventileinrichtung und über einen Vorratsanschluß mit einer Druckmittelquelle oder über ein Auslaßventil der Ventileinrichtung und über einen Druckentlastungsausgang mit einem Druckentlastungsraum verbindbar. Betätigt wird die bekannte Ventileinrichtung durch Zuführung bzw. Abführung von Steuerdruck in die bzw. aus der Steuerkammer über eine Drosseleinrichtung, wodurch der Relaiskolben seinerseits die Ventileinrichtung betätigt. Die Drosseleinrichtung dient der Einstellung der Belüftungszeit des Verbraucherkreises. Mit der bekannten Relaisventileinrichtung wird infolge der Ausbildung des Relaiskolbens nach Abschluß einer Betätigung ein dem Steuerdruck im wesentlichen gleicher Verbraucherdruck in der Auslaßkammer und im Verbraucherkreis erzielt. Die Erfindung soll aber auch eine Ausbildung der Relaisventileinrichtung erfassen, mit der durch entsprechende Gestaltung des Relaiskolbens ein gegenüber dem Steuerdruck übersetzter oder untersetzter Verbraucherdruck erzielt wird. Für eine derartige Ausbildung gelten die folgenden Ausführungen entsprechend.

Im folgenden sind die Begriffe "Volumen des Verbraucherkreises" bzw. "Volumen der Steuerkammer" als die Volumina der etwa zugehörigen Arbeitsleitungen und der Auslaßkammer bzw. das Volumen der Steuerdruckzuleitung enthaltend zu verstehen. Es wird auch unterstellt,, daß die etwa vorhandene wenigstens eine Arbeitsleitung in ihrem Durchflußwiderstand so ausgelegt ist, daß der Verbraucherdruck in Auslaßkammer des Relaisventils und Verbraucherkreis bei voll geöffneter Ventileinrichtung stets im wesentlichen gleich ist. In der Regel ist das Volumen des Verbraucherkreises wesentlich größer als das Volumen der Steuerkammer. Deshalb und wegen des Durchflußwiderstands der etwa vorhandenen Arbeitsleitungen stellt sich bei der bekannten Relaisventileinrichtung der dem Steuerdruck entsprechende Verbraucherdruck gegenüber dem Steuerdruck verzögert ein, mit anderen Worten: Der Verbraucherdruck eilt dem Steuerdruck (zeitlich) nach.

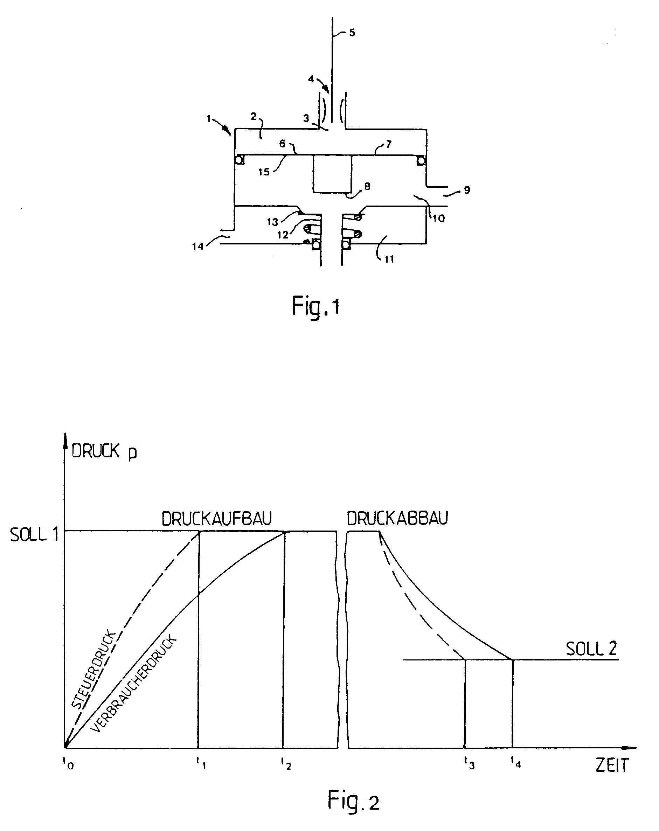

In dem Druck/Zeit-Schaubild der Fig. 2 ist dieses Verhalten schematisch dargestellt. Das Schaubild zeigt im linken Teil eine Druckaufbauphase und im rechten Teil eine Druckabbauphase. Parallel zur Zeitachse ist eine Linie SOLL₁ für einen angestrebten ersten SOLL-Verbraucherdruck eingetragen, im rechten Teil ist zusätzlich eine Parallele SOLL₂ zur Zeitachse, die einen am Abschluß der Druckabbauphase angestrebten zweiten SOLL-Verbraucherdruck darstellt, eingetragen. Es ist ersichtlich, daß in der Druckaufbauphase der Steuerdruck den Wert SOLL₁ zu einem Zeitpunkt t₁ erreicht, während der Verbraucherdruck diesen Wert erst zu einem späteren Zeitpunkt t₂ erreicht. t₂ - t₁ ist die Nacheilung. Der Fachmann erkennt, daß entsprechend in der Druckabbauphase die Nacheilung t₄ - t₃ beträgt.

Nun gibt es Einsatzfälle, in denen die erwähnte Nacheilung Probleme schafft. Ein solcher Einsatzfall ist beispielsweise gegeben, wenn der Verbraucherkreis aus einem oder mehreren Bremszylindern einer blockiergeschützten Fahrzeug-Bremsanlage besteht. Nehmen wir an, daß der Verbraucherdruck, der bei t₁ erreicht ist, das dem Verbraucherkreis zugeordnete Fahrzeugrad, wobei "Fahrzeugrad" auch mehrere Fahrzeugräder bedeuten kann, in die Nähe seiner Blockiergrenze bringt. Dann gibt die Blockierschutzanlage in diesem Zeitpunkt ein Signal, aufgrund dessen die Steuerdruckzuführung abbricht. Trotz unterbrochener Steuerdruckzuführung steigt nun der Verbraucherdruck weiter an, bis er im Zeitpunkt t₂ den Wert SOLL₁ erreicht. Der nacheilende Verbraucherdruckanstieg im Nacheilungszeitraum t₂ - t₁ führt zu einem unerwünscht hohen Schlupf des Fahrzeugrades bzw. bedingt zu dessen Vermeidung zusätzliche Maßnahmen. Entsprechendes gilt, wenn das Fahrzeugrad bei anstehendem ersten SOLL-Verbraucherdruck an seine Blockiergrenze gerät und die Blockierschutzanlage eine Druckabbauphase einleitet. Der rechte Teil des Schaubilds veranschaulicht dies. Die Folge ist in diesem Fall jedoch statt des hohen Schlupfes, daß das Fahrzeugrad unterbremst wird und der Luftverbrauch steigt.

Der Erfindung liegt nun die Aufgabe zugrunde, eine Relaisventileinrichtung der eingangs genannten Art mit einfachen Mitteln so zu verbessern, daß sie bei gegebenem Verbraucherkreis die Nacheilung des Verbraucherdrucks gegenüber dem Steuerdruck wenigstens im wesentlichen auf das unvermeidbare Maß beschränkt.

Diese Aufgabe wird durch die im Patentanspruch 1 angegebene Erfindung gelöst. Weiterbildungen und vorteilhafte Ausgestaltungen sind in den Unteransprüchen angegeben.

Die Erfindung läßt sich mit jeder geeigneten Art Druckmittel ausführen. Üblicherweise wird das im Druckentlastungsraum gesammelte Druckmittel wieder einer Druckmittelquelle zugeführt, d. h. auf einen Vorratsdruck hochgespannt. Im Falle der Verwendung von Druckluft als Druckmittel läßt sich in vorteilhafter Weise die Atmosphäre als Druckentlastungsraum heranziehen.

Die Erfindung läßt sich einfach und kostengünstig ausbilden, wenn die Steuerdruckzuleitung, wie in den Patentansprüchen 3 und 4 gelehrt wird, durch zwei Absperrventile oder ein Absperrventil und ein Umschaltventil, jeweils magnetgesteuert, kontrolliert wird.

In einer derartigen Ausgestaltung ist die Erfindung aufgrund der Magnetsteuerung zum Einsatz in Verbindung mit einer elektrischen Blockierschutzanlage besonders geeignet.

Eine Ausgestaltung der vorstehend erwähnten Art kann zur weiteren Kostenminderung undoder zur Schaffung einer kompakten Bauweise dadurch fortgebildet werden, daß die Drosseleinrichtung durch geeignete Auslegung des Durchlflußwiderstands eines oder der erwähnten magnetgesteuerten Ventile hergestellt wird.

Die Erfindung wird nachstehend unter Angabe weiterer Vorteile und unter durchgehender Verwendung gleicher Bezugszeichen für Bauteile mit gleichen Funktionen in Zeichnungen dargestellt.

Es zeigen:
- Fig. 1: schematisch eine Relaisventileinrichtung,
- Fig. 2: ein Druck/Zeit-Schaubild,
- Fig. 3: eine Relaisventileinrichtung mit magnetgesteuerter Steuerdruckzu- bzw. -abführung,
- Fig. 4: eine andere Relaisventileinrichtung mit magnetgesteuerter Druckzu- bzw. -abführung.

Alle Ausführungsbeispiele sind in Verbindung mit Druckluft als Druckmittel beschrieben, sie stehen aber auch bei entsprechender Anwendung für den Einsatz mit anderen Druckmitteln.

Die in Fig. 1 dargestellte Relaisventileinrichtung (1) weist oberhalb eines Relaiskolbens (6) eine Steuerkammer (2) und unterhalb des Relaiskolbens (6) eine Auslaßkammer (10) auf. Über eine Steuerdruckzuleitung (5, 3), welche auch einen Steueranschluß (3) umfaßt, ist Steuerdruck der Steuerkammer (2) zuführbar bzw. aus der Steuerkammer (2) abführbar.

Die Auslaßkammer (10) ist einerseits über einen Arbeitsanschluß (9) mit einem nicht dargestellten Verbraucherkreis verbunden. Andererseits ist die Auslaßkammer (10) über eine Ventileinrichtung (8, 12, 13) mit einer Vorratskammer (11), die ihrerseits über einen Vorratsanschluß (14) mit einer nicht dargestellten Druckmittelquelle verbunden ist, oder mit der Atmosphäre als Druckentlastungsraum verbindbar.

Die Ventileinrichtung (8, 12, 13) besteht aus einem Einlaßventil (12, 13) und einem Auslaßventil (8, 12). Zur Bildung der Ventile weist die Ventileinrichtung (8, 12, 13) einen verschiebbar geführten hohlen Ventilkörper (12) auf, der mit einem gehäusefesten Ventilsitz (13) das Einlaßventil (12, 13) und mit einem an dem Relaiskolben (6) angebrachten Ventilsitz (8) das Auslaßventil (8, 12) bildet.

Der Relaiskolben (6) begrenzt mit seiner einen Fläche, die als Steuerfläche (7) dient, die Steuerkammer (2) und mit seiner anderen Fläche, die als Wiegefläche (15) dient, die Auslaßkammer (10).

In der Steuerdruckzuleitung (5, 3) ist eine Drosseleinrichtung (4) angeordnet. Körperlich befindet sich diese Drosseleinrichtung (4) in dem Steueranschluß (3), sie kann aber auch an jeder anderen Stelle der Zuleitung (5, 3) angeordnet sein. Es gibt Einsatzfälle, in denen die Anordnung an anderer Stelle wegen etwa besserer Zugänglichkeit zum Zwecke des Einstellens der Drosseleinrichtung vorteilhaft ist.

Für die folgende Funktionsbeschreibung sei zunächst angenommen, daß in der Steuerkammer (2), im Verbraucherkreis und in der Auslaßkammer (10) Atmosphärendruck herrsche. In diesem Zustand sind das Einlaßventil (12, 13) durch eine nicht näher bezeichnete Rückstellfeder geschlossen und das Auslaßventil (8, 12) geöffnet. Ein der Steuerkammer (2) zugeführter Steuerdruck beaufschlagt die Steuerfläche (7) des Relaiskolbens (6) und verschiebt diesen unter Mitnahme des Ventilsitzes (8). Im Verlaufe der Verschiebung setzt der Ventilsitz (8) auf den Doppelventilkörper (12) auf und nimmt diesen mit. Dabei werden das Auslaßventil (8, 12) geschlossen und das Einlaßventil (12, 13) geöffnet. Hat sich im Verbraucherkreis und in der Auslaßkammer (10) ein Verbraucherdruck aufgebaut, der über die Wiegefläche (15) den Relaiskolben (6) gegenüber dem auf der Steuerfläche (7) wirkenden Steuerdruck ins Gleichgewicht bringt, so bewegt sich der Relaiskolben (6) soweit zurück, daß gleichzeitig das Auslaßventil (8, 12) und das Einlaßventil (12, 13) geschlossen sind. Dieser Zustand stellt eine Abschlußstellung der Ventileinrichtung (8, 12, 13) dar. Stehen der Verbraucherkreis und die Auslaßkammer (10) bereits unter Verbraucherdruck und wird zum Zwecke von dessen Erhöhung ein höherer Steuerdruck zugeführt, so wirken der Relaiskolben (6) und die Ventileinrichtung (8, 12, 13), ausgehend von der Abschlußstellung, entsprechend der soeben beschriebenen Weise zusammen.

Wird Steuerdruck aus der Steuerkammer (2) abgeführt, so wird der Relaiskolben (6) von dem zunächst überwiegenden Verbraucherdruck über die Wiegefläche (15) bewegt, wobei sich das Auslaßventil (8, 12) öffnet und Druckmittel aus Verbraucherkreis und Auslaßkammer (10) über den hohlen Innenraum des Ventilkörpers (12) in die Atmosphäre entweicht. Bei Wiederherstellung des Gleichgewichts am Relaiskolben (6) durch Abbau des Verbraucherdrucks kehren Relaiskolben (6) und Ventilsitz (8) in die die Abschlußstellung der Ventileinrichtung (8, 12, 13) bestimmende Lage zurück.

Zum Aufbau bzw. zum Abbau des Verbraucherdrucks im Verbraucherkreis muß das dazu erforderliche Druckmittelvolumen das Einlaßventil (12, 13) bzw. das Auslaßventil (8, 12) durchströmen. Der Querschnitt des Einlaßventils (12, 13) bzw. des Auslaßventils (8, 12), das Volumen des Verbraucherkreises und der Durchflußwiderstand wenigstens einer etwa vorhandenen Arbeitsleitung bestimmen daher die Aufbaugeschwindigkeit bzw. Abbaugeschwindigkeit des Verbraucherdrucks (im Verbraucherkreis und) in der Auslaßkammer (10). Die Drosseleinrichtung (4) dient dazu, durch Begrenzung der Nacheilung des Verbraucherdruckes gegenüber dem Steuerdruck auf ein Maß, das wenigstens angenähert gerade das volle Öffnen der Ventileinrichtung (8, 12, 13) gewährleistet, die Aufbaugeschwindigkeit bzw. die Abbaugeschwindigkeit des Steuerdrucks in der Steuerkammer der Aufbaugeschwindigkeit bzw. der Abbaugeschwindigkeit des Verbraucherdrucks in der Auslaßkammer (10) wenigstens angenähert so weit wie möglich anzunähern. Bezogen auf das Druck/Zeit-Schaubild der Fig. 2 bedeutet dies, daß in der Druckaufbauphase und in der Druckabbauphase die Steuerdruckkurven derart in Richtung längerer Zeiten verschoben werden, daß sie mit der jeweiligen Verbraucherdruckkurve nahezu zusammenfallen. Dadurch wird das Auftreten einer Nacheilung des Verbraucherdrucks gegenüber dem Steuerdruck im wesentlichen vermieden.

Da der Abbau des Verbraucherdrucks in der Regel über einen großen Querschnitt ((Hohlraum des Ventilkörpers (12)) und auf kürzerem Wege erfolgt, ist die im Vorstehenden definierte Nacheilung in der Druckabbauphase tendenziell geringer als in der Druckaufbauphase. Diese Eigenschaft kann im Sinne einer Verbesserung des Zeitverhaltens ausgewertet werden, indem die Drosseleinrichtung (4) in Strömungsrichtung des abgeführten Steuerdrucks für einen geringeren Durchflußwiderstand bemessen wird.

Soll die Ventileinrichtung (1) alternativ für Verbraucherkreise unterschiedlicher Volumina eingesetzt werden, so empfiehlt es sich, die Bemessung der Drosseleinrichtung (4) auf den Verbraucherkreis mit dem größten Volumen abzustimmen. In diesem Fall wird das Zeitverhalten in Verbindung mit den Verbraucherkreisen mit kleineren Volumina demjenigen des Verbraucherkreises mit dem größten Volumen angepaßt, d. h. gegenüber der bekannten Relaisventileinrichtung verschlechtert; dieser Nachteil wird jedoch in der Regel durch den Vorteil einer einheitlichen Ausbildung der Relaisventileinrichtung (1) mehr als ausgeglichen.

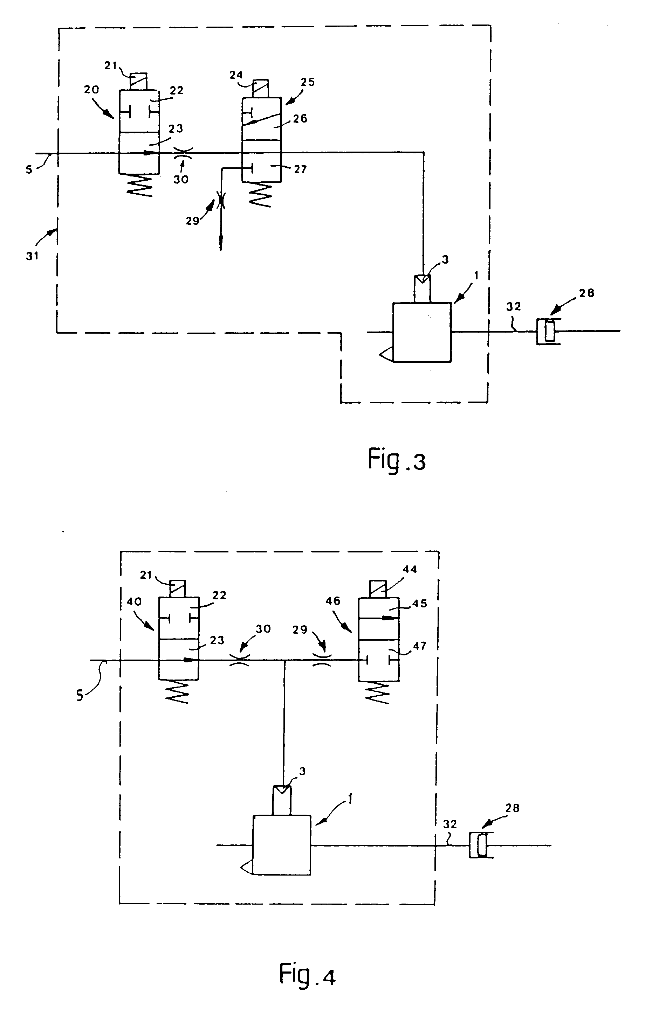

Fig. 3 zeigt eine Ausgestaltung der Ventileinrichtung (1), in der die Steuerdruckzuleitung (5, 3) durch ein magnetgesteuertes Absperrventil (20) und ein magnetgesteuertes Umschaltventil (25) kontrolliert wird.

Mit (28, 32) ist in diesem Falle ein durch einen Bremszylinder (28) und eine Arbeitsleitung (32) symbolisierter Verbraucherkreis bezeichnet, wobei der Bremszylinder (28) auch für mehrere Bremszylinder und die Arbeitsleitung (32) auch für mehrere Arbeitsleitungen stehen.

Das Abschaltventil (20) weist eine erste Stellung (23) und eine zweite Stellung (22) auf. In der ersten Stellung (23), in die es bei entregtem zugehörigen Magneten (21) zurückgestellt wird, gibt das Absperrventil (20) die Steuerleitung (5, 3) frei. In seiner zweiten Stellung (22), in die es durch Erregung des Magneten (21) gestellt wird, sperrt das Absperrventil (20) die Steuerleitung (5, 3).

Das Umschaltventil (25) weist eine erste Stellung (27) und eine zweite Stellung (26) auf. In der ersten Stellung (27), in die es bei entregtem zugehörigen Magneten (24) zurückgestellt wird, gibt das Umschaltventil (25) die Steuerleitung (5, 3) frei. In seiner zweiten Stellung (26), in die es durch Erregung seines Magneten (24) gestellt wird, sperrt das Umschaltventil (25) die Steuerleitung (5, 3) und verbindet deren stromabwärts gelegenen Teil und damit den Steueranschluß (3) sowie die Steuerkammer (2) des Relaisventils (1) mit der Atmosphäre.

Für die Rückstellung des Absperrventils (20) und des Umschaltventils (25) in die jeweils erste Stellung (23 bzw. 27) sind Federn vorgesehen. Die Rückstellung kann aber auch auf jeder andere geeignete Weise erfolgen, beispielsweise durch einen Druck.

Die hier mit (30, 29) bezeichnete Drosseleinrichtung besteht aus einer dem Abschaltventil (20) zugeordneten Drossel (30) und einer dem nicht näher bezeichneten Druckentlastungsausgang des Umschaltventils zugeordneten Drossel (29). Die Drosseln (30 bzw. 29) können aus dem weiter oben erwähnten Grunde unterschiedlich bemessen und/oder unterschiedlich einstellbar sein. Die Drosseln stehen auch symbolisch dafür, daß in nicht näher dargestellter Weise die Drosseleinrichtung durch geeignete Auslegung des Durchflußwiderstands des Absperrventils (20) und/oder des Umschaltventils (25) herstellbar ist.

Im Normalbetrieb sind die Magnete (21 und 24) entregt und die Steuerleitung (5, 3) durchgängig. In dieser Druckaufbaustellung wird der Steuerdruck zum Steueranschluß (3) und zur Steuerkammer (2) des Relaisventils (1) durchgelassen und von dem Relaisventil (1), wie oben beschrieben, in Verbraucherdruck umgesetzt.

Durch Erregung des Magneten (21) des Absperrventils (20) ist eine Druckhaltestellung einstellbar. In dieser kann infolge der Absperrung der Steuerleitung (5, 3) der Steuerdruck bzw. ein weiterer Anstieg desselben in die Steuerkammer (2) des Relaisventils (1) nicht durchdringen mit der Folge, daß sich auch ein Verbraucherdruck nicht aufbaut bzw. vorhandener Verbraucherdruck nicht weiter steigt.

Durch Erregung des Magneten (24) des Umschaltventils (25) ist eine Umstellung aus der Druckaufbaustellung in eine Druckabbaustellung möglich. Aus der Druckhaltestellung ist eine Umstellung in die Druckabbaustellung durch gleichzeitiges Entregen des Magneten (21) und Erregen des Magneten (24) möglich. In der Druckabbaustellung ist die Steuerleitung (5, 3) durch das Umschaltventil (25) gesperrt, gleichzeitig sind aber ihr stromabwärts des Umschaltventils (25) gelegener Teil und damit die Steuerkammer (2) des Relaisventils (1) mit der Atmosphäre verbunden. Aufgrund des dadurch hervorgerufenen Steuerdruckabfalls bewirkt das Relaisventil (1) in der oben beschriebenen Weise einen entsprechenden Abfall des Verbraucherdrucks.

Das vorliegende Ausführungsbeispiel ist also durch Erregung nur jeweils eines der Magneten (21) bzw. (24) zwischen der Druckaufbaustellung, der Druckhaltestellung und der Druckabbaustellung umstellbar. Diese magnetgesteuerte Umstellmöglichkeit kann nach bekannten Verfahren zum Blockierschutz eines oder mehrerer dem Verbraucherkreis zugeordneter Fahrzeugräder ausgewertet werden. Dabei ist, wie aus der Beschreibungseinleitung hervorgeht, die mit der Erfindung wenigstens im wesentlichen erzielte Unterdrückung der Nacheilung des Verbraucherdrucks gegenüber dem Steuerdruck von großem Vorteil.

Durch eine mit (31) bezeichnete, gestrichelt dargestellte Umfassungslinie ist angedeutet, daß die Relaisventileinrichtung (1) mit den anderen beschriebenen Einrichtungen ganz oder teilweise zu einer Baueinheit vereinigt sein kann und daß auch die anderen Einrichtungen bzw. Teile davon untereinander eine oder mehrere Baueinheiten bilden können.

Es liegt auf der Hand, daß, sofern die Anordnung in Reihe erhalten bleibt, die Reihenfolge des Absperrventils (20) und des Umschaltventils (25) auch verändert werden kann.

Für das Ausführungsbeispiel nach der Fig. 4 gelten, soweit nachstehend nichts Abweichendes gesagt wird, die zu den vorherigen Ausführungsbeispielen gegebenen Erläuterungen wenigstens entsprechend mit.

Zur Kontrolle der Steuerdruckzuleitung dienen hier ein erstes magnetgesteuertes Absperrventil (40) und ein zweites magnetgesteuertes Absperrventil (46). Das zweite Absperrventil (46) ist parallel zum ersten Absperrventil (40) in dem stromabwärts des ersten Absperrventils (40) gelegenen Teil der Steuerdruckzuleitung (5, 3) angeordnet.

Der Aufbau des ersten Absperrventils (40) ist, wie durch gleiche Bezugszeichen für dessen Magnet und Stellungen angedeutet ist, mit dem Aufbau des Absperrventils (20) identisch.

Das zweite Absperrventil (46) weist eine erste Stellung (45) und eine zweite Stellung (47) auf, die den Stellungen des ersten Absperrventils (40) entsprechen, dem zugehörigen Magneten (44) funktionsmäßig jedoch umgekehrt zugeordnet sind.

Auch hier sind in der Druckaufbaustellung beide Magnete (21 und 44) entregt.

Die Umstellung in die Druckhaltestellung geschieht wieder durch Erregung des Magneten (21).

Zur Umstellung aus der Druckhaltestellung in die Druckabbaustellung ist jedoch zusätzlich zum Magneten (21) die Erregung des Magneten (44) erforderlich. Zur Umstellung aus der Druckaufbaustellung in die Druckabbaustellung ist die gleichzeitige Erregung beider Magneten (21 und 44) erforderlich. Das bedingt eine Verdoppelung des Erregerstroms und bedeutet deshalb einen Nachteil gegenüber dem Ausführungsbeispiel nach Fig. 3. Dieser Nachteil ist insbesondere gravierend, wenn der Verbraucherkreis eine Anhänger-Bremsanlage ist, weil der Anhänger üblicherweise über Steckverbindungen und lange Leitungen von der elektrischen Anlage eines Zugfahrzeugs versorgt wird, wobei infolge der begrenzten Belastbarkeit der Steckverbindungen und der durch die Steckverbindungen und die langen Leitungen verursachten Spannungsverluste die Frage des Strombedarfs von besonderer Bedeutung ist, dies um so mehr, wenn an Lastzüge mit mehreren aufeinander folgenden Anhängern gedacht wird, wie sie in einigen Ländern üblich sind.

Im übrigen gelten die zu einzelnen Ausführungsbeispielen gegebenen Erläuterungen, soweit aus ihnen nichts anderes hervorgeht, für die anderen Ausführungsbeispiele wenigstens entsprechend mit.

Der Fachmann erkennt, daß sich der Schutzbereich der vorliegenden Erfindung nicht in den Ausführungsbeispielen erschöpft, sondern alle Ausgestaltungen erfaßt, deren Merkmale sich den Patentansprüchen unterordnen.

## Patentansprüche

1. Durch Steuerdruckzu- bzw. abführung betätigbare Relaisventileinrichtung (1) mit einer mit einer Steuerdruckzuleitung (5, 3) verbundenen Steuerkammer (2) und mit einer einerseits mit einem Verbraucherkreis verbundenen und andererseits über eine Ventileinrichtung (8, 12, 13) mit einer Druckmittelquelle oder einem wenigstens im wesentlichen überdruckfreien Druckentlastungsraum verbindbaren Auslaßkammer (10), wobei in der Steuerdruckzuleitung (5, 3) eine Drosseleinrichtung (4; 30, 29) angeordnet ist, dadurch gekennzeichnet, daß die Drosseleinrichtung (4; 30, 29) derart bemessen ist, daß bei einer Betätigung der Relaisventileinrichtung (1) die in bekannter Weise auftretende Nacheilung des Verbraucherdruckes in der Auslaßkammer (11) gegenüber dem Steuerdruck nicht oder nur unwesentlich größer ist, als dies zum vollen Öffnen der Ventileinrichtung (8, 12, 13) erforderlich ist.

2. Ventileinrichtung nach Anspruch 1, dadurch gekennzeichnet, daß als Druckmittel Druckluft dient und der Druckentlastungsraum die Atmosphäre ist.

3. Relaisventileinrichtung nach einem der Ansprüche 1 oder 2,
dadurch gekennzeichnet,
daß die Steuerdruckzuleitung (5, 3) durch ein magnetgesteuertes Absperrventil (20), welches bei erregtem Magneten (21) die Steuerdruckleitung (5, 3) sperrt, und ein magnetgesteuertes Umschaltventil (25), welches bei erregtem Magneten (24) die Steuerleitung (5, 3) sperrt und deren stromabwärts des Umschaltventils (25) gelegenen Teil mit dem Druckentlastungsraum verbindet, kontrolliert wird.

4. Relaisventileinrichtung nach einem der Ansprüche 1 oder 2,
dadurch gekennzeichnet,
daß die Steuerdruckzuleitung (5, 3) durch ein erstes magnetgesteuertes Absperrventil (40), welches bei erregtem Magneten (21) die Steuerzuleitung (5, 3) sperrt, und ein zweites magnetgesteuertes Absperrventil (46), welches bei erregtem Magneten die Steuerleitung (5, 3) mit dem Druckentlastungsraum verbindet, kontrolliert wird.

5. Relaisventileinrichtung nach Anspruch 3,
dadurch gekennzeichnet,
daß die Drosseleinrichtung (30, 29) durch geeignete Auslegung des Durchflußwiderstands des Absperrventils (20) und/oder des Umschaltventils (25) hergestellt ist.

6. Relaisventileinrichtung nach Anspruch 4,
dadurch gekennzeichnet,
daß die Drosseleinrichtung (30, 29) durch geeignete Auslegung des Durchflußwiderstands des ersten Absperrventils (40) und/oder des zweiten Absperrventils (46) hergestellt ist.

7. Relaisventileinrichtung nach einem der vorhergehenden Ansprüche,
dadurch gekennzeichnet, daß wenigstens eine etwa zum Verbraucherkreis (28, 32) gehörende Arbeitsleitung (32) in ihrem Durchflußwiderstand so ausgelegt ist, daß bei einer vollen Öffnung der Ventileinrichtung (8, 12, 13) der Verbraucherdruck in Auslaßkammer (10) und Verbraucherkreis (28, 32) stets im wesentlichen gleich ist.

8. Relaisventileinrichtung nach einem der vorhergehenden Ansprüche, die alternativ für mehrere Verbraucherkreise unterschiedlich großer Volumina einsetzbar ist,
dadurch gekennzeichnet,
daß die Bemessung der Drosseleinrichtung (4; 30, 29) auf den Verbraucherkreis mit dem größten Volumen ausgelegt ist.

## Claims

1. A relay valve arrangement (1) operable by admitting or discharging control pressure, having a control chamber (2) connected to a control pressure admission line (5, 3), and an outlet chamber (11) which is connected at one side to a load circuit and at the other side is arranged to be connected by way of a valve arrangement (8, 12, 13) to a source of pressure medium or to a pressure relief chamber which is at least substantially free from excess pressure, a throttling device (4; 30, 29) being arranged in the control pressure admission line (5, 3), characterized in that the throttling device (4; 30,29) is rated so that on actuation of the relay valve arrangement (1) the lag that occurs in known manner of the load pressure in the outlet chamber (11) behind the control pressure, is not, or is only insignificantly, greater than is required for full opening of the valve arrangement (8, 12, 13).

2. A valve arrangement according to claim 1, characterized in that compressed air is used as pressure medium and the pressure relief chamber is the atmosphere.

3. A valve arrangement according to one of claims 1 or 2, characterized in that the control pressure admission line (5, 3) is controlled by a magnetically controlled shut-off valve (20), which valve when the magnet (21) is energized blocks the control pressure line (5, 3), and by a magnetically controlled change-over valve (25), which valve when the magnet (24) is energized blocks the control line (5, 3) and connects the part positioned downstream of the change-over valve (25) with the pressure relief chamber.

4. A relay valve arrangement according to one of claims 1 and 2, characterized in that the control pressure admission line (5, 3) is controlled by a first magnetically controlled shut-off valve (40), which valve when the magnet (21) is energized blocks the control admission line (5, 3), and by a second magnetically controlled shut-off valve (46), which valve when the magnet is energized connects the control line (5, 3) to the pressure relief chamber.

5. A relay valve according to claim 3, characterized in that the throttling device (30, 29) is created by suitable rating of the flow resistance of the shut-off valve (20) and/or the change-over valve (25).

6. A relay valve according to claim 4, characterized in that the throttling device (30, 29) is created by suitable rating of the flow resistance of the first shut-off valve (40) and/or the second shut-off valve (46).

7. A relay valve arrangement according to one of the preceding claims, characterized in that the flow resistance of at least one working line (32) belonging for instance to the load circuit (28, 32) is designed so that when the valve arrangement (8, 12, 13) is fully open the load pressure in the outlet chamber (10) and in the load circuit (28, 32) is always substantially the same.

8. A relay valve arrangement according to one of the preceding claims, which can be used as an alternative for several load circuits of different volumes, characterized in that the rating of the throttling device (4; 30, 29) is designed for the load circuit having the largest volume.

## Revendications

1. Ensemble de valve-relais (1), susceptible d'être actionné par admission ou évacuation d'une pression de commande, comprenant une chambre de commande (2) reliée à une conduite (5, 3) de pression de commande, et comprenant une chambre de sortie (11) reliée d'une part à un circuit utilisateur, et capable d'être reliée d'autre part par l'intermédiaire d'un ensemble de valve (8, 12, 13) soit à une source de fluide sous pression soit à une chambre de décharge de pression au moins sensiblement exempte de surpression, un dispositif d'étranglement (4 ; 30, 29) étant agencé dans la conduite (5, 3) de pression de commande, caractérisé en ce que le dispositif d'étranglement (4 ; 30, 29) est dimensionné de telle manière que lors d'un actionnement de l'ensemble de valve-relais (1) le retard qui se produit de façon connue pour la pression d'utilisation dans la chambre de sortie (11) par à la pression de commande n'est pas supérieur, ou n'est pas sensiblement supérieur, à ce qui est nécessaire pour l'ouverture complète de l'ensemble de valve (8, 12, 13).

2. Ensemble de valve selon la revendication 1, caractérisé en ce qu'on utilise de l'air comprimé en tant que fluide sous pression, et en ce que la chambre de décharge de pression est l'atmosphère.

3. Ensemble de valve-relais selon l'une ou l'autre des revendications 1 et 2, caractérisé en ce que la conduite de pression de commande (5, 3) est contrôlée par une valve d'isolement (20), commandée par solénoïde, qui bloque la conduite (5, 3) de la pression de commande lorsque le solénoïde (21) est excité, et une valve de commutation (25), commandée par solénoïde, qui bloque la conduite de commande (5, 3) lorsque le solénoïde (24) est excité, et dont la partie située en aval de la valve de commutation (25) est reliée à la chambre de décharge de pression.

4. Ensemble de valve-relais selon l'une ou l'autre des revendications 1 et 2, caractérisé en ce que la conduite (5, 3) de pression de commande est contrôlée par une première valve d'isolement (40), commandée par solénoïde, qui bloque la conduite de commande (5, 3) lorsque le solénoïde (21) est excité, et une seconde valve d'isolement (46), commandée par solénoïde, qui relie la conduite de commande (5, 3) et la chambre de décharge de pression lorsque le solénoïde est excité.

5. Ensemble de valve-relais selon la revendication 3, caractérisé en ce que le dispositif à étranglement (30, 29) est réalisé par une conception appropriée de la résistance d'écoulement de la valve d'isolement (20) et/ou de la valve de commutation (25).

6. Ensemble de valve-relais selon la revendication 4, caractérisé en ce que le dispositif à étranglement (30, 29) est réalisé par une conception appropriée de la résistance d'écoulement de la première valve d'isolement (40) et/ou de la seconde valve d'isolement (46).

7. Ensemble de valve-relais selon l'une quelconque des revendications précédentes, caractérisé en ce qu'au moins une conduite de travail (32) qui appartient au circuit utilisateur (28, 32) est réalisée quant à sa résistance d'écoulement de telle manière que lorsque l'ensemble de valve (8, 12, 13) est complètement ouvert la pression d'utilisation dans la chambre de sortie (10) et dans le circuit utilisateur (28, 32) est constamment sensiblement égale.

8. Ensemble de valve-relais selon l'une quelconque des revendications précédentes, susceptible d'être utilisé de façon alternative pour plusieurs circuits utilisateurs de volume de tailles différentes, caractérisé en ce que le dimensionnement du dispositif d'étranglement (4 ; 30, 29) est déterminé vis-à-vis du circuit utilisateur qui présente le volume maximum.
